# EUROPEAN PATENT SPECIFICATION

(11) **EP 3 080 717 B1**
(45) Date of publication and mention of the grant of the patent: **04.03.2020**
(21) Application number: 13899339.9
(22) Date of filing: 11.12.2013
(51) Int. Cl.: G06F 16/27, G06F 16/2455, G06F 12/08, G06F 12/0868, G06F 12/0888, G06F 12/0893, G06F 3/06, G06F 12/0813

(54) **CACHE AND NON-CACHE USAGE IN A DISTRIBUTED STORAGE SYSTEM**
CACHE UND NON-CACHE-VERWENDUNG IN EINEM VERTEILTEN SPEICHERSYSTEM
UTILISATION DE MÉMOIRE CACHE ET NON DE CACHE DANS UN SYSTÈME DE MÉMOIRE DISTRIBUÉ

(43) Date of publication of application: 19.10.2016
(73) Proprietor: Intel Corporation, Santa Clara, CA 95054 (US)
(72) Inventor: BARNES, Thomas J., Beaverton, Oregon 97007 (US)
(74) Representative: Rummler, Felix
(86) International application number: PCT/US2013/074290
(87) International publication number: WO 2015/088505

(56) References cited:
- WO-A1-2011/059979
- US-A1- 2004 088 297
- US-A1- 2006 174 063
- US-A1- 2006 174 063
- US-A1- 2008 046 736
- US-A1- 2011 138 102
- US-A1- 2011 138 102
- US-A1- 2011 161 557
- US-A1- 2011 196 833

## Description

### Background

In general, a distributed storage system can include multiple disparately located nodes in which to store corresponding data. Typically, the storage nodes are interconnected with each other via a network. Communications between the storage nodes enable the storage nodes to collectively manage stored data. Computers are able to communicate with the distributed storage system to retrieve stored data at one or more nodes.

If desired, backup copies of data can be stored in a distributed storage system. For example, a first storage node in a distributed storage system can be configured to store a primary copy of data. A second storage node in the distributed storage system can be configured to store a backup copy of the primary data. If one of the nodes becomes unavailable, the remaining storage node can be accessed to retrieve corresponding data.

Distributed storage systems have gained popularity as a means to provide low-cost, reliable storage of data in a cloud infrastructure. Distributed storage systems are often implemented in software and run on standard high-volume servers and utilize inexpensive rotating media such as hard disk drives to store data. In certain instances, in addition to including a rotating disk to store data, storage nodes in a conventional distributed storage system can also include a cache resource (such as one or more solid-state memory devices) to store data.

From US 2006/174063 A1 an embodiment of a method of cooperative caching for a distributed storage system is known that begins with a step of requesting data from storage devices which hold the data. The method continues with a step of receiving any cached blocks and expected response times for providing non-cached blocks from the storage devices. The method concludes with a step of requesting a sufficient number of the non-cached blocks from one or more particular storage devices which provides an expectation of optimal performance.

In WO 2011/059979 A1 a method for implementing selective file system caching is described. The method includes receiving I/O requests from an application and comparing each of the I/O requests with a configurable cache map, wherein the configurable cache map controls a selective caching based on an I/O type and a file type. Each of the I/O requests are processed to render caching decisions based on the configurable cache map. Selective caching is then implemented on each of the I/O requests in accordance with the caching decisions.

In US 2011/138102 A1 a method for accessing data stored in a distributed storage system is provided. The method comprises determining whether a copy of first data is stored in a distributed cache system, where data in the distributed cache system is stored in free storage space of the distributed storage system; accessing the copy of the first data from the distributed cache system if the copy of the first data is stored in a first data storage medium at a first computing system in a network; and requesting a second computing system in the network to access the copy of the first data from the distributed cache system if the copy of the first data is stored in a second data storage medium at the second computing system. If the copy of the first data is not stored in the distributed cache system, the first data is accessed from the distributed storage system.

In US 2008/046736 A1 a data processing system is described that includes a system memory and a cache hierarchy that caches contents of the system memory. According to one method of data processing, a storage modifying operation having a cacheable target real memory address is received. A determination is made whether or not the storage modifying operation has an associated bypass indication. In response to determining that the storage modifying operation has an associated bypass indication, the cache hierarchy is bypassed, and an update indicated by the storage modifying operation is performed in the system memory. In response to determining that the storage modifying operation does not have an associated bypass indication, the update indicated by the storage modifying operation is performed in the cache hierarchy.

The invention is set out in the appended independent claims . Advantageous embodiments are defined by the appended dependent claims. The embodiments or examples of the following description which are not covered by the appended claims are considered as not being part of the invention according to this description.

### Brief Description of the Drawings

FIG. 1 is an example diagram illustrating storage of received data at a first node and storage of corresponding replica data at a second node in a distributed storage system according to embodiments herein.
FIG. 2 is an example diagram illustrating storage of received data at a second node and storage of corresponding replica data at a first node in a distributed storage system according to embodiments herein.
FIG. 3 is an example diagram illustrating use of map information to keep track of primary data and backup data stored at different nodes in a distributed storage system according to embodiments herein.
FIG. 4 is an example diagram illustrating map information according to embodiments herein.
FIG. 5 is an example diagram illustrating recovery from a node failure and replication of data in a distributed storage system according to embodiments herein.
FIG. 6 is an example diagram illustrating recovery from a node failure and replication of data in a distributed storage system according to embodiments herein.
FIG. 7 is an example diagram illustrating updated map information indicating storage of different content in a distributed storage system according to embodiments herein.
FIG. 8 is an example diagram illustrating a processing architecture in which to execute one or more methods according to embodiments herein.
FIG. 9 is an example flowchart illustrating a method according to embodiments herein.

### Description of the Embodiments

One reason for the widespread use of a cache such as solid-state memory devices in lieu of rotating disk drives is performance. Access to data in a solid-state memory (e.g., one or more stationary physical circuit devices) is typically much quicker than access to data stored in a disk (e.g., a physically rotating storage medium). A downside of using solid-state memory in lieu of a spinning disk-drive to store data is capacity cost. That is, although solid state-drives provide quicker access, the cost per bit to store data in corresponding memory devices can be considerably higher than the cost per bit to store data in a disk drive.

As discussed above, each node in a conventional distributed storage system can include both a non-volatile cache resource and corresponding disk drive resource to store data. When storing data, a primary node receiving the data may initially store a copy of the received data in a corresponding cache resource of the primary node. One reason to store the data in cache is that the data is likely to be frequently retrieved. Another reason to store the data in cache is that the data is likely to be retrieved in the near future.

The primary node can be configured to determine when data is removed from the cache. One reason to remove data from the cache is that the data is seldom retrieved, and can be replaced by data that will be more frequently retrieved. Another reason to remove data from the cache is because the data is not expected to be retrieved in the near future, and can be replaced by data that is more likely to be retrieved in the near future. When the primary node determines that the copy of received data in the cache resource is to be removed from the cache, the primary node may initiate a transfer of the data from the cache to a disk drive resource. After the transfer, the primary node then erases the copy of received data in the cache resource to free up storage cells in the cache resource for storage of other data.

As discussed above, in certain instances, it is desirable that a replica of data stored at a first storage node in the distributed storage system is also stored at a second storage node of the distributed storage system. This provides redundancy. Storage of the replica data is often useful in situations where one of the multiple storage nodes fails. For example, a first storage node may experience a failure preventing access to corresponding data. Because a replica of the data is stored at the second storage node in the distributed storage system, a client device can retrieve the replica of the data from the second storage node.

This disclosure includes the observation that conventional distributed storage systems do not efficiently store data in cache and non-cache resources. For example, conventional storage logic in a distributed storage system may store received data in cache even though such data is unlikely to be accessed.

As discussed herein, in certain instances, it is desirable that a replica of data stored at a first storage node in the distributed storage system is also stored at a second storage node of the distributed storage system. This provides redundancy. Storage of the replica data is often useful in situations where one of the multiple storage nodes fails. For example, a first storage node may experience a failure preventing access to corresponding data. Because a replica of the data is stored at the second storage node in the distributed storage system, a client device can retrieve the replica of the data from the second storage node.

This disclosure includes the observation that conventional distributed storage systems do not efficiently store data in cache and non-cache resources. For example, conventional storage logic in a distributed storage system may store received data in cache even though such data is unlikely to be accessed.

Embodiments herein include providing improved use of cache and non-cache resources in a distributed storage environment.

For example, embodiments herein include a distributed storage system including multiple nodes that collectively manage corresponding data storage. Each of one or more nodes in the distributed storage system can be configured to include both a cache resource (such as a non-volatile memory storage resource) and a non-volatile non-cache resource (such as a disk drive, solid state-drive, etc.) to store data.

As discussed herein, in one example embodiment, an access time to access data stored in the cache resource is substantially faster than an access time to access data stored in the non-cache resource.

In contrast to conventional techniques, upon receiving data for storage, a respective node in the distributed storage system produces metadata based on the received data. The metadata can indicate whether or not to bypass storage of the received data in the cache storage resource and store the received data in the non-cache storage resource of the repository. Embodiments herein are useful because the metadata can indicate to prevent storage of corresponding received data in cache if storage of the data in the cache is deemed unnecessary.

In a more specific embodiment, data storage control logic at a respective storage node uses the metadata (generated for corresponding received data) to control how the received data is stored. For example, as mentioned, a state of the metadata can indicate to prevent storage of the received data in a corresponding cache resource associated with the respective storage node. In such an instance, in accordance with the received metadata, the data storage control logic initiates storage of the received data in the corresponding non-cache resource as opposed to storing the data in the cache resource of the corresponding storage node.

In accordance with yet further embodiments, the metadata can indicate whether a copy of the data received at a respective storage node is replica data already stored at another location in the distributed storage system. The respective node receiving the data for storage can be configured to determine whether the received data is a replica of data available from another node in the distributed storage system. If the data is replicated data (such as from initial replication when the data is first stored in the distributed storage system) or from a rebuild (such as when data lost from a failing node is replicated for storage at another node), the respective node produces the corresponding metadata to indicate that the received data is to be stored in the non-cache resource.

Thus, certain embodiments herein can include preventing replica data from being stored in cache since the replica data stored in the non-cache resource is likely not to be accessed often, if at all, because another copy of the data is already available from a different node in the distributed storage system. As mentioned, more storage cells in corresponding cache resources can then be used to store other data more likely to be accessed.

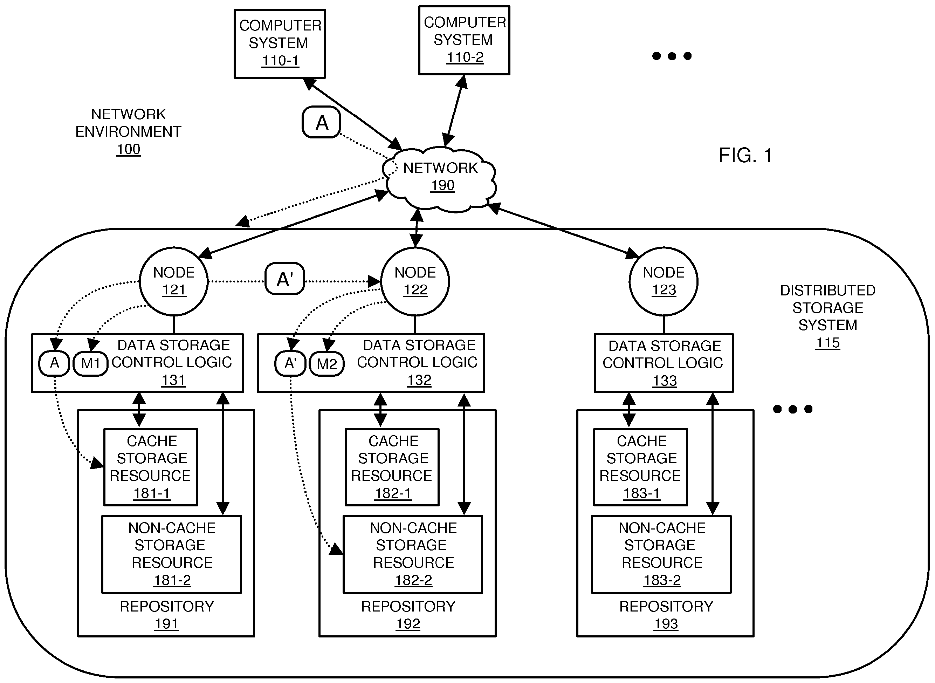

Now, referring more specifically to the figures, FIG. 1 is an example diagram illustrating implementation of a distributed storage system according to embodiments herein.

As shown, network environment 100 includes computer system 110-1, computer system 110-2, etc. Each of the computer systems 110 has access to distributed storage system 115 over network 190. Nodes in distributed storage system 115 store data on behalf of computer systems 110. Network 190 can be more include any suitable one or more types of networks supporting communications. For example, network 190 can include the Internet, one or more local area networks, one or more wide area networks, cellular phone network, WiFi™ networks, etc. Via communications over network 190, the computer systems 110 have the ability to retrieve data from and store data in storage nodes of distributed storage system 115. Communications over network 190 can be based on any suitable type of network communication protocol. For example, in one embodiment, the communications are based on one or more Internet protocols such as HTTP (Hypertext Transfer Protocol), FTP (File Transfer Protocol), TCP (Transmission Control Protocol), UDP (User Datagram Protocol), etc.

Distributed storage system 115 includes any suitable number of nodes to manage storage of data. In this example embodiment, as shown, distributed storage system 115 includes storage node 121, storage node 122, storage node 123, etc. In one embodiment, each of the storage nodes in distributed storage system 115 is able to communicate with each other over a suitable link such as network 190.

By way of non-limiting example, each of the nodes in distributed storage system 115 can be configured to provide access to a corresponding repository of data. In this example embodiment, as shown, node 121 has READ/WRITE access to repository 191 via communications with data storage control logic 131; node 122 has READ/WRITE access to repository 192 via communications with data storage control logic 132; node 123 has READ/WRITE access to data stored in repository 193 communications with data storage control logic 133; and so on.

In one embodiment, each of the nodes in distributed storage system 115 represents corresponding computer processor hardware or software that carries out operations as discussed herein. Corresponding data storage control logic (hardware or software) associated with each node can be co-located and executed by the node. Alternatively, the corresponding data storage control logic can be executed on or reside on a computer processing hardware disposed at a remote location with respect to the node. Thus, node 121 and corresponding data storage control logic 131 can be co-located or disparately located; node 122 in corresponding data storage control logic 132 can be co-located or disparately located; and so on.

As further shown, storage resources associated with each node can include cache storage resources and non-cache storage resources. For example, repository 191 includes cache storage resource 181-1 and non-cache storage resource 181-2; repository 192 includes cache storage resource 182-1 and non-cache storage resource 182-2; repository 193 includes cache storage resource 183-1 and non-cache storage resource 183-2; and so on. As discussed herein, in one embodiment, each of the cache storage resources and non-cache storage resources are non-volatile storage resources.

In accordance with further embodiments, a data access time of a respective non-volatile cache resource can be substantially shorter than a data access time of a respective non-volatile non-cache resource. For example, an access time to READ data from or WRITE data to cache storage resource 181-1 can be substantially shorter than an access time to READ data from or WRITE data to non-cache storage resource 181-2; an access time to READ data from or WRITE data to cache storage resource 182-1 can be substantially shorter than an access time to READ data from or WRITE data to non-cache storage resource 182-2; an access time to READ data from or WRITE data to cache storage resource 183-1 can be substantially shorter than an access time to READ data from or WRITE data to non-cache storage resource 183-2; and so on.

Further by way of non-limiting example, each of the cache storage resources in distributed storage system 115 can represent a solid-state drive including one or more non-volatile type memory devices to store data. As a more specific example, each of the cache storage resources (such as cache storage resource 181-1, cache storage resource 182-1, cache storage resource 183-1,...) can be or include one or more non-volatile type memory devices such as Phase Change Memory (PCM), a three dimensional cross point memory, a resistive memory, nanowire memory, Ferro-electric Transistor Random Access Memory (FeTRAM), flash memory such as NAND flash or NOR flash, Magnetoresistive Random Access Memory (MRAM), memory that incorporates memristor technology, Spin Transfer Torque (STT)-MRAM, or any suitable type of non-volatile memory that enables storage of data.

Each of the non-cache storage resources (such as non-cache storage resource 181-2, non-cache storage resource 182-2, non-cache storage resource 183-2,...) at different nodes in distributed storage system 115 can be a disk drive storage resource including one or more spinning disks of storage cells to store corresponding data.

Assume in this example embodiment that computer system 110-1 communicates with node 121 to initiate storage of data A (such as image data, application data, a document, ...) in distributed storage system 115 as shown. To achieve this end, computer system 110-1 transmits data A over network 190 to node 121 for storage. As shown, storage node 121 receives data A.

In response to receiving data A for storage in repository 191, the node 121 generates metadata M1 associated with data A. Metadata M1 can be or include any suitable number of bits of information to provide guidance regarding storage of data A.

In this example embodiment, assume that the node 121 knows that data A is not replica data (i.e., data already stored in distributed storage system 115) because data is newly data received from computer system 110-1 for storage in distributed storage system 115. If needed, the node 121 can communicate with other nodes to determine if a copy of data has already been stored at a respective node. Node 121 generates metadata M1 to reflect that data A is not replica data stored elsewhere in distributed storage system 115.

As shown, in furtherance of storing corresponding data A in repository 191, the node 121 communicates over a suitable communication link such as network 190 to forward a copy of data A and metadata M1 to data storage control logic 131. In this manner, the node 121 provides notification of the received data A and the corresponding generated metadata M1 to the data storage control logic 131.

In one embodiment, the metadata M1 is control information, label information, etc., providing guidance for storing received data A in the repository 191. By way of non-limiting example, metadata M1 can be a single bit set to a logic zero indicating that data A is eligible for storage in cache storage resource 181-1.

Further in this example embodiment, data storage control logic 131 receives the copy of data A and corresponding metadata M1. In this example, since metadata M1 does not indicate to prevent storage of data A in cache storage resource 181-1, assume that the data storage control logic 131 initiates storage of data A in cache storage resource 181-1.

In addition to initiating storage of data A in repository 191, the node 121 produces and forwards replica A' to node 122. In this example, replica A' represents a backup copy of data A stored in cache storage resource 181-1. Storage of the replica A' at another node (such as node 122) is useful in case there is a failure associated with node 121 and corresponding data A cannot be retrieved from corresponding repository 191.

Node 122 receives replica A' and initiates corresponding storage of this received data in repository 192. Because the received data (replica A') is known by the node 122 to be a backup copy of data (because it was received as replica data from node 121 or node 121 sends a message indicating so), the node 122 produces metadata M2 to prevent storage of replica A' in cache storage resource 182-1. More specifically, in response to detecting that a copy (A) of the replica data A' is available from a node (such as node 121) in distributed storage system 115, the node 122 generates the metadata M2 to indicate to the data storage control logic 132 to bypass storage of the received data A' in the cache storage resource 182-1 and instead store the received replica data A' in a non-cache storage resource.

By further way of non-limiting example, metadata M2 can be a single bit set to a logic one indicating that replica data A' received at storage node 122 should not be stored in cache storage resource 181-1. Thus, as mentioned above, the metadata generated by node 122 can serve as status information, a label, a tag, control information, etc., providing guidance as how to store corresponding data.

To complete storage, the node 122 forwards A' and corresponding metadata M2 to data storage control logic 132. Data storage control logic 132 analyzes the metadata M2 associated with replica A'. Since the metadata M2 indicates to prevent storage of replica A' in a cache storage resource, the data storage control logic 132 initiates storage of replica A' in non-cache storage resource 182-2.

Thus, via generation of corresponding metadata to control storage of data, storage cells of the cache storage resource 182-1 are not needlessly wasted for storing replica data A', which is not likely to be accessed very often, if at all, since data A (such as a primary copy) is available to computer system 110-1 via communications with node 121 and retrieval of data from cache storage resource 181-1.

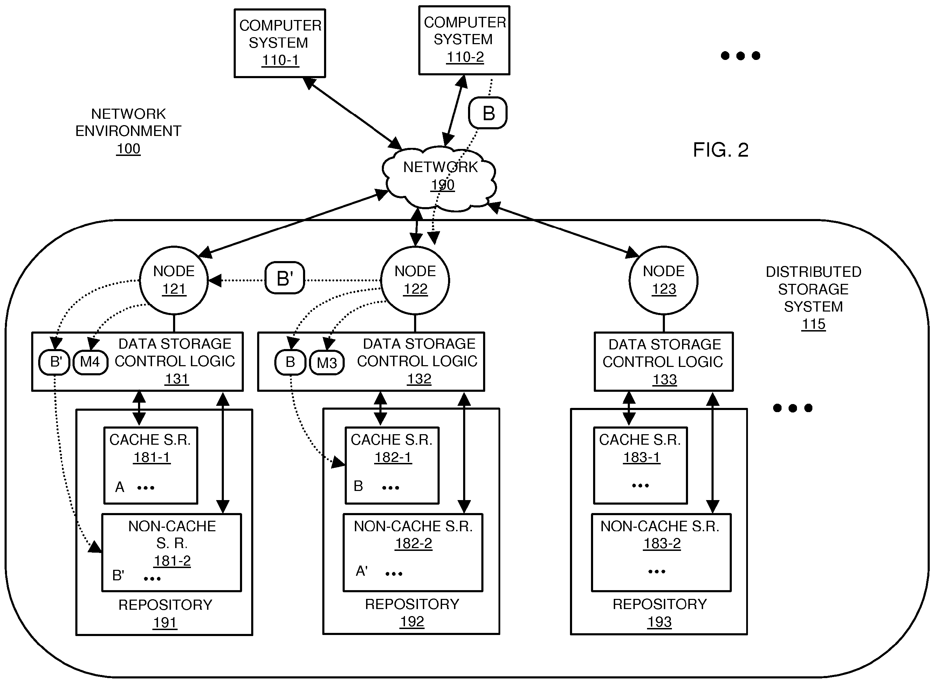

FIG. 2 is an example diagram illustrating storage of received data at a second node and storage of corresponding replica data at a first node in a distributed storage system according to embodiments herein.

Assume in this example embodiment that computer system 110-2 communicates with node 122 to initiate storage of data B (such as image data, application data, document data, ...) in distributed storage system 115 as shown. To achieve this end, computer system 110-2 transmits data B over network 190 to node 122 for storage.

Storage node 122 receives the data B. In response to receiving data B for storage, the node 121 generates metadata M3 associated with data B. Metadata M3 can be or include any suitable number of bits of information. Generated metadata M3 provides guidance regarding storage of data B.

In this example embodiment, assume that the node 122 knows that data B is not replica data (i.e., it is not data already stored in distributed storage system 115) because data B is received as a new request to store data in distributed storage system 115. When generating metadata, the node 122 generates metadata M3 to reflect that data B is not replica data stored elsewhere in distributed storage system 115. Because the data B is not replica data, the data B is eligible for storage in cache storage resource 182-1.

As shown, in furtherance of storing corresponding data B at node 122, the node 122 forwards a copy of data B and corresponding generated metadata M3 to data storage control logic 132. In this manner, the node 122 provides notification of the received data B and the metadata M3 to the data storage control logic 132.

In one embodiment, the metadata M3 is control information providing guidance for storing received data B in the repository 192. By way of non-limiting example, metadata M3 can be a single bit set to a logic zero indicating that data B is eligible for storage in cache storage resource 182-1.

Further in this example embodiment, data storage control logic 132 receives the copy of data B and corresponding metadata M3. Since metadata M3 does not indicate to prevent storage of data B in cache storage resource 182-1, assume that the data storage control logic 132 initiates storage of data B in cache storage resource 182-1.

In addition to initiating storage of data B in repository 192, the node 122 produces and forwards replica B' (a copy of data B) to node 121. In this example, replica B' represents a backup copy of data B stored in cache storage resource 182-1. Storage of the replica B' (i.e., a copy of data B) at another node (such as node 121) is useful in case there is a failure associated with node 122 and corresponding data B cannot be retrieved from repository 192 at node 122.

Node 121 receives replica B' and initiates corresponding storage of this received data in repository 192. Because the received data (replica B') is known by the node 121 to be a backup copy of data (because it was received as replica data from node 122), the node 121 produces metadata M4 to prevent storage of replica B' in cache storage resource 181-1 of repository 191.

In one embodiment, in response to detecting that a copy of the replica data B' is available from a node (such as node 122) in distributed storage system 115, the node 121 generates the metadata M4 to indicate to the data storage control logic 131 to bypass storage of the received data B' in the cache storage resource 181-1 and instead store the received replica data B' in the non-cache storage resource 181-2 of the repository 191.

As previously discussed, generated metadata M4 can be a single bit set to a logic one indicating that replica data B' should not be stored in cache storage resource 181-1. Thus, the metadata generated by node 121 can serve as status information, a label, a tag, control information, etc., providing guidance as how to store corresponding data B'.

Further in this example embodiment, to complete storage, the node 121 forwards data B' and corresponding metadata M4 to data storage control logic 131. Data storage control logic 131 analyzes the metadata M4 associated with replica data B'. Since the metadata M4 in this example indicates to prevent storage of replica B' in a cache storage resource (since it was detected as being replica data), the data storage control logic 131 initiates storage of replica B' in non-cache storage resource 181-2.

Thus, via generation of corresponding metadata M4 to control storage of data, storage cells of the cache storage resource 181-1 are not needlessly wasted for storing replica data B', which is not likely to be accessed very often, if at all, since data B (such as a primary copy) is available to computer system 110-2 (or potentially other computers) via communications with node 122 and retrieval of data B from cache storage resource 182-1.

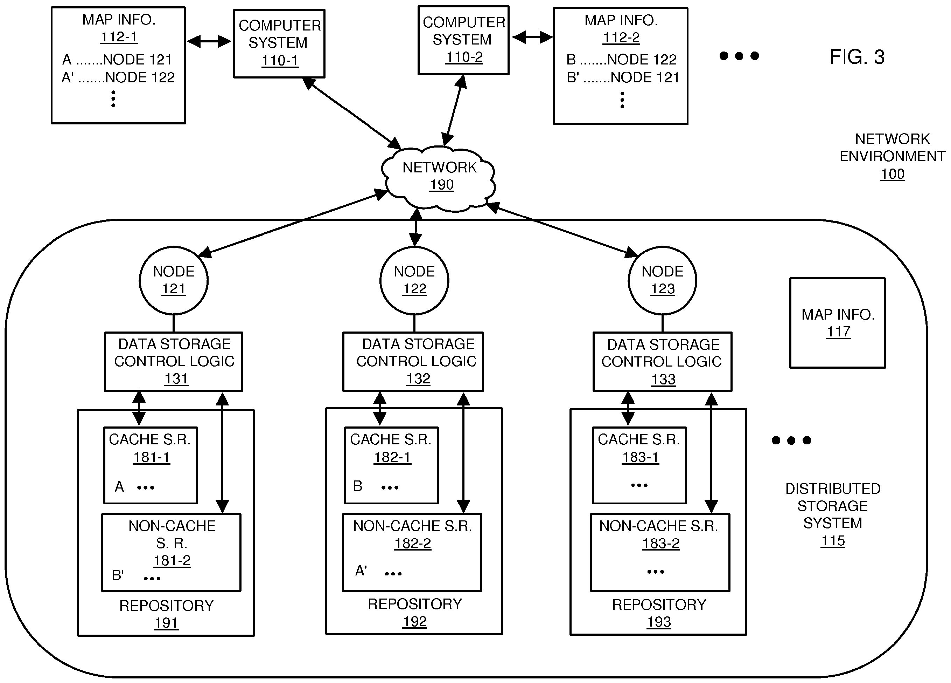

FIG. 3 is an example diagram illustrating use of map information to keep track of primary content and backup content stored at different nodes in a distributed storage system according to embodiments herein.

As shown, computer system 110-1 (or other suitable resource) can be configured to produce map information 112-1 indicating corresponding nodes in the distributed storage system 115 from which corresponding data is available.

For example, as previously discussed, computer system 110-1 initiated storage of data A in distributed storage system 115. In response to receiving the request store data, the appropriate node 121 in distributed storage system 115 stored the corresponding data A. During such a process, the appropriate resource such as node 121 (or other suitable resource such as a central manager) in distributed storage system 115 can be configured to communicate, to the computer system 110-1, node information (such as network address information) indicating the location where a primary copy of data (i.e., data A) is available. In this example, based on receiving notification that data A is stored at node 121, map information 112-1 indicates that data A is available for retrieval from node 121.

In accordance with one configuration, the computer system 110-1 can also receive node information indicating where a backup copy of corresponding data is stored in the distributed storage system 115. For example, recall that node 122 stores a replica A' (i.e., a copy of data A) in repository 192. In such an instance, the computer system 110-1 can be informed that data A' is available via communications with node 122 (or other suitable resource such as a central manager) in distributed storage system 115.

In one embodiment, computer system 110-1 produces map information 112-1 to include a corresponding network address or pointer for node 122 from which data A' is available for retrieval.

Computer system 110-2 (or other suitable resource) can be configured to produce map information 112-2 indicating corresponding nodes in the distributed storage system 115 from which corresponding data is available. For example, as previously discussed, computer system 110-2 initiated storage of data B in distributed storage system 115. In response to receiving the request store data, the appropriate node 122 in distributed storage system 115 stored the corresponding data B. During such a process, the appropriate resource such as node 122 (or a resource such as a central manager) in distributed storage system 115 communicates, to the computer system 110-2, node information indicating the location where a primary copy of data (i.e., data B) is available. In this example, based on receiving notification that data B is stored at node 122, the computer system 110-2 produces map information 112-2 to indicate that data B is available for retrieval from node 122.

In accordance with one configuration, the computer system 110-2 also receives node information indicating where a backup copy B' of corresponding data is stored in the distributed storage system 115. For example, recall that node 121 stores a replica B' (i.e., a copy of data B) in repository 192. In such an instance, the computer system 110-2 can be informed that data B' is available via communications with node 121 in distributed storage system 115. In one embodiment, computer system 110-2 produces map information 112-2 to include a resource such as a network address, pointer, etc., specifying node 121 from which data B' is available for retrieval.

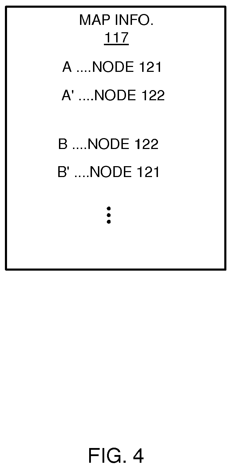

In accordance with yet further non-limiting example embodiments, a resource such as a central manager or one or more nodes in distributed storage system 115 can be configured to communicate amongst each other and generate map information 117 indicating different content and where the corresponding content is stored. An example of the corresponding map information 117 is shown in FIG. 4.

As shown in FIG. 4, in this example embodiment, map information 117 indicates that data A is available via communications with node 121; map information 117 indicates that replica data A' is available via communications with node 122; map information 117 indicates that data B is available via communications with node 122; map information 117 indicates that replica data B' is available via communications with node 122; and so on.

Map information such as map information 112-1, map information 112-2, etc., are useful to determine the location of primary content and backup content. For example, if a respective computer system is unable to retrieve content from a first node within a timeout period, the corresponding computer system can be configured to communicate with a second node to retrieve the backup copy instead.

More specifically, assume that the computer system 110-1 attempts to retrieve data A from node 121. If there is no response from node 121 within a timeout such as two seconds (other suitable access manager of time), the computer system 110-linitiates communication with node 122 (as specified by the map information 112-1) to retrieve backup copy A'. In this way, a computer system can use the map information 112 to identify a location of corresponding data.

As discussed below, note that the map information 117 on stored content may be useful in the event of a node failure in distributed storage system 115 requiring repair of lost data.

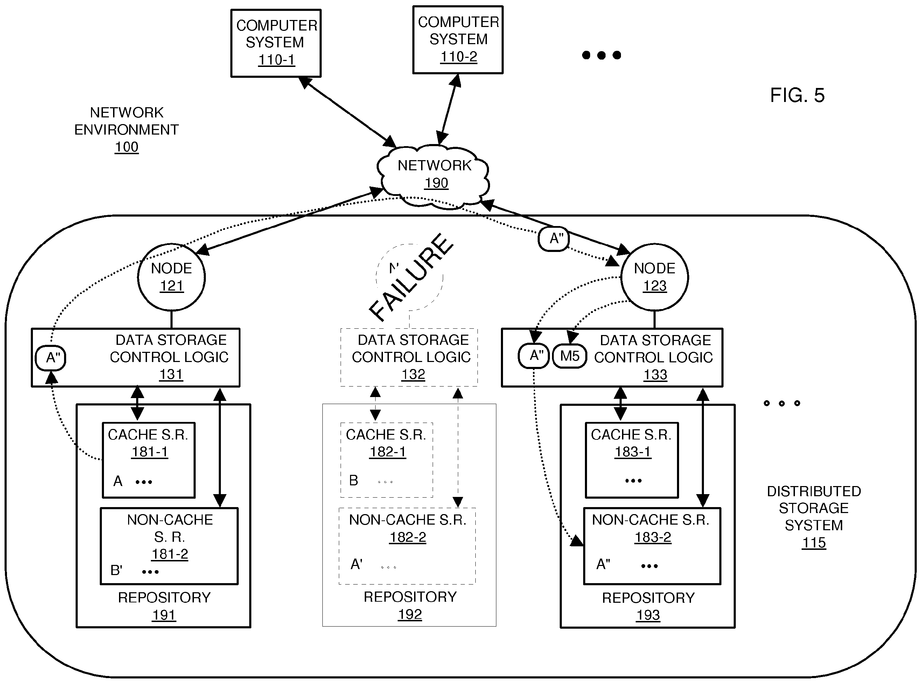

FIG. 5 is an example diagram illustrating recovery from a node failure and replication of data in a distributed storage system according to embodiments herein.

In this example embodiment, assume that node 122 or related components such as data storage control logic 132, storage cells in repository 192, etc., fails.

The failure associated with node 122 can result in the inability of node 122 to be accessed by computer systems 110 over network 190, inability of data storage control logic 132 to retrieve corresponding data stored in repository 192, failure of stored cells in repository 192 to store data, and so on.

The failure associated with node 122 can be detected in any number of ways. For example, one or more nodes in the distributed storage system 115 can be configured to communicate (such as via heartbeat signals) with other nodes to determine their status. If a node such as node 122 does not respond to communications, it can be assumed that there has been a node failure and that corresponding data stored in repository 192 is unavailable for retrieval.

Upon detecting a failure, the nodes in distributed storage system 115 communicate amongst each other to replicate the unavailable data in repository 192 to other nodes.

More specifically, in this example embodiment, the failure associated with node 122 prevents access to data A' stored in cache storage resource 182-2. Based on the map information 117 as previously discussed, it is known that cache storage resource 181-1 associated with node 121 stores a copy of data A.

To ensure that a backup copy of data A is stored in distributed storage system 115, in response to detecting failure associated with node 122, the node 121 initiates retrieval of a copy of data A from cache storage resource 181-1 via communications to data storage control logic 131.

Subsequent to retrieving a copy of data A, data storage control logic 131 produces replica copy A". The node 121 forwards replica A" (i.e., a copy of data A) to node 123 as shown to node 123. Thus, the data A" received by node 123 represents a replica of unavailable data A' stored at failed node 122 in the distributed storage system 115.

Node 121 (or other suitable resource associated with distributed storage system 115) notifies node 123 that data A" is a copy of stored data. In response to detecting that the data A" received from node 121 is rebuild data (i.e., a copy of data A' stored in the repository 192 associated with the failed node 122), the node 123 generates metadata M5 to indicate to the data storage control logic 133 to bypass storage of the received data A" in the cache storage resource 183-1 and store the received data A" in the non-cache storage resource 183-2 of the repository 193.

Accordingly, embodiments herein can include producing a copy (i.e., data A") of the data A' stored at the failed node based on data A stored in cache storage resource 181-1 of the non-failing node 121 and initiating storage of the data A" in non-cache storage resource 183-2 of repository 193.

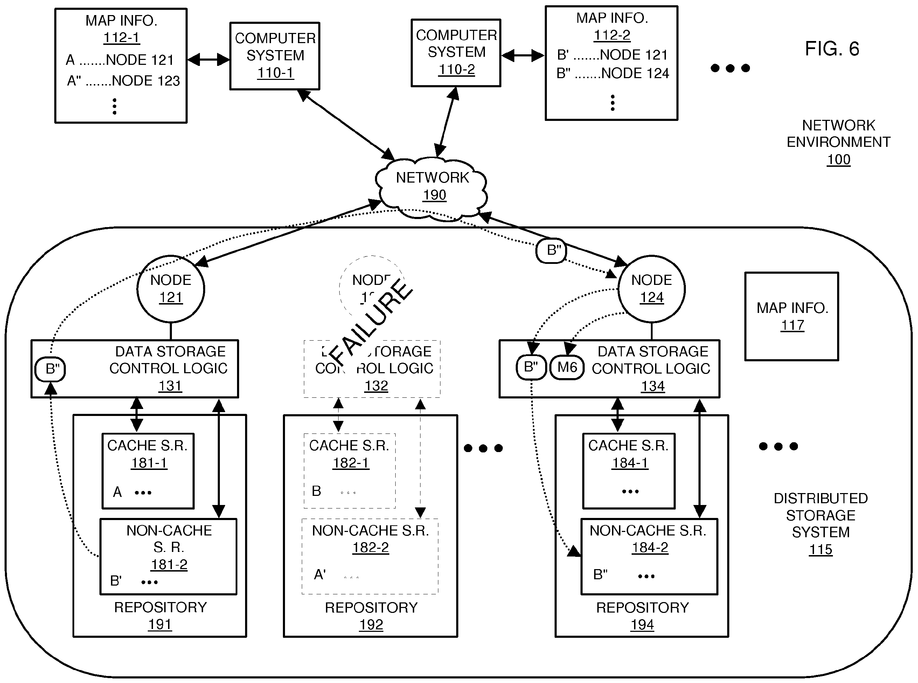

FIG. 6 is an example diagram illustrating recovery from a node failure and replication of data in a distributed storage system according to embodiments herein.

In this example embodiment, the failure associated with node 122 also prevents access to data B stored in cache storage resource 182-1. Based on the map information 117 as previously discussed, it is known that non-cache storage resource 181-2 associated with node 121 stores data B'. To ensure that a backup copy of data B is stored in distributed storage system 115, embodiments herein include in response to detecting the failure associated with node 122, node 121 initiates retrieval of a copy of replica data B' from cache storage resource 181-1 via communications to data storage control logic 131.

Assume in this example that node 124 amongst nodes in distributed storage system 115 has been chosen (by a resource such as another node or central manager) to produce and store the backup copy associated with data B. In such an instance, the node 121 forwards replica B" (i.e., a copy of original data B) to node 124 as shown. The data B" received by node 124 represents a replica of data B stored at failed node 122.

In response to detecting that the received data B" is a copy of data B stored in repository 192 associated with the failed node 122, the node 124 generates metadata M6 to indicate to the data storage control logic 134 to bypass storage of the received data B" in the cache storage resource 184-1 and store the received data B" in a non-cache storage resource such as non-cache storage resource 184-2 of the repository 194.

Accordingly, embodiments herein can include producing a copy (i.e., data B") of the data B stored at the failed node based on data B' stored in non-cache storage resource 181-2 of the non-failing node 121.

Subsequent to repair as discussed above, embodiments herein can include updating respective map information to reflect the current state of content stored in distributed storage system 115. For example, a respective resource (such as a node or central manager) associated with distributed storage system 115 can be configured to communicate with computer system 110-1 to update map information 112-1 to indicate that data A is available from node 121, backup data A" is now available from node 123, and so on.

In a similar manner, the respective resource (such as a node or central manager) associated with distributed storage system 115 can be configured to communicate with computer system 110-2 to update map information 112-2 to indicate that data B' is available from node 121, backup data B" is now available from node 124, and so on.

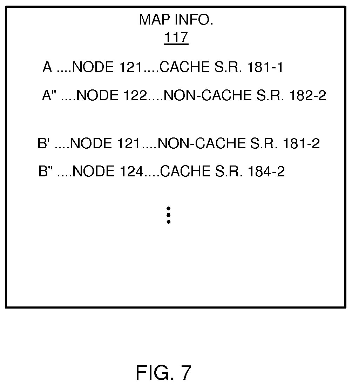

FIG. 7 is an example diagram illustrating updated map information indicating storage of different content in a distributed storage system according to embodiments herein.

In accordance with yet further non-limiting example embodiments, a central manager or one or more nodes in distributed storage system 115 can be configured to update map information 117 to indicate a state of stored data after a rebuild due to a failure.

As shown in FIG. 7, updated map information 117 indicates that data A is accessible via node 121; updated map information 117 indicates that replica data A" (from repair or rebuild) is accessible via node 122; updated map information 117 indicates that data B' is accessible via node 121; updated map information 117 indicates that replica data B" (from repair or rebuild) is accessible via node 124; and so on.

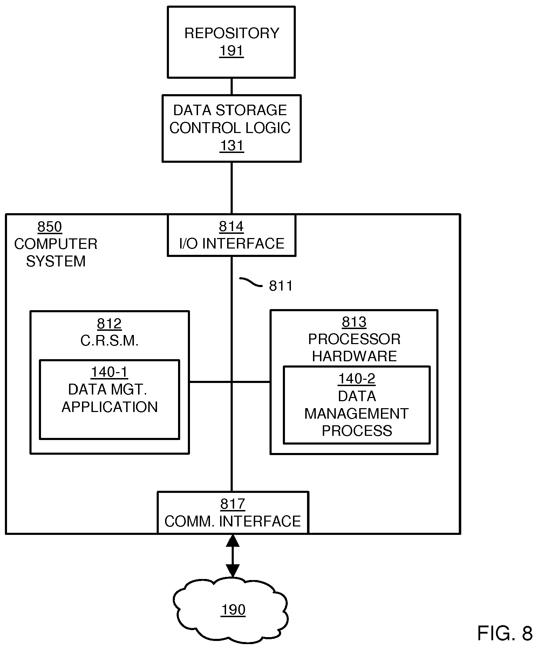

FIG. 8 is an example block diagram of a computer system for implementing any of the operations as discussed herein according to embodiments herein.

Computer system 850 such as a node 121 in distributed storage system 115 can be configured to execute any of the operations as discussed herein. In one embodiment, a respective node in distributed storage system 115 executes data management application 140-1. Each of the nodes, data storage control logic, etc., in the distributed storage system 115 can include similar hardware to carry out functionality as discussed herein.

As further shown, computer system 850 of the present example can include an interconnect 811 that couples computer readable storage media 812 to processor hardware 813. Computer readable storage medium 812 can be a non-transitory type of media (i.e., any type of hardware storage medium) in which digital information is stored and retrieved by resources such as processor hardware 813 (i.e., one or more processor devices), I/O interface 814, communications interface 817, etc.

Communication interface 817 provides connectivity with network 190 and supports communication with other nodes in distributed storage system 115 and computer systems 110.

Assume that the computer system 850 represents node 121 in network environment 100, In such an instance, I/O interface 814 provides the computer system 850 connectivity to resources such as data storage control logic 131 and repository 191. If desired, functionality provided by data storage control logic 131 also can be executed on computer system 850 as a process.

Computer readable storage medium 812 can be any hardware storage device such as memory, optical storage, hard drive, floppy disk, etc. In one embodiment, the computer readable storage medium 812 (e.g., a computer readable hardware storage) stores instructions and/or data.

In one embodiment, communications interface 817 enables the computer system 850 and corresponding processor hardware 813 to communicate over a resource such as network 190 to retrieve information from remote sources and communicate with other computers (such as nodes). I/O interface 814 enables processor hardware 813 to communicate with data storage control logic 131 and retrieve and store data in repository 191.

As shown, computer readable storage media 812 is encoded with data management application 140-1 (e.g., software, firmware, etc.) executed by processor 813. Data management application 140-1 can be configured to include instructions to implement any of the operations as discussed herein.

During operation of one embodiment, processor hardware 813 accesses computer readable storage media 812 via the use of interconnect 811 in order to launch, run, execute, interpret or otherwise perform the instructions in data management application 140-1 stored on computer readable storage medium 812.

Execution of the data management application 140-1 produces processing functionality such as data management process 140-2 in processor 813. In other words, the data management process 140-2 associated with processor 813 represents one or more aspects of executing data management application 140-1 within or upon the processor hardware 813 in the computer system 850.

Those skilled in the art will understand that the computer system 850 can include other processes and/or software and hardware components, such as an operating system that controls allocation and use of hardware resources, software resources, etc., to execute data management application 140-1.

In accordance with different embodiments, note that computer system 850 may be any of various types of devices, including, but not limited to, a mobile computer, a mobile phone, a personal computer system, a wireless device, base station, phone device, desktop computer, laptop, notebook, netbook computer, mainframe computer system, handheld computer, workstation, network computer, application server, storage device, a consumer electronics device such as a camera, camcorder, set top box, mobile device, video game console, handheld video game device, a peripheral device such as a switch, modem, router, or in general any type of computing or electronic device.

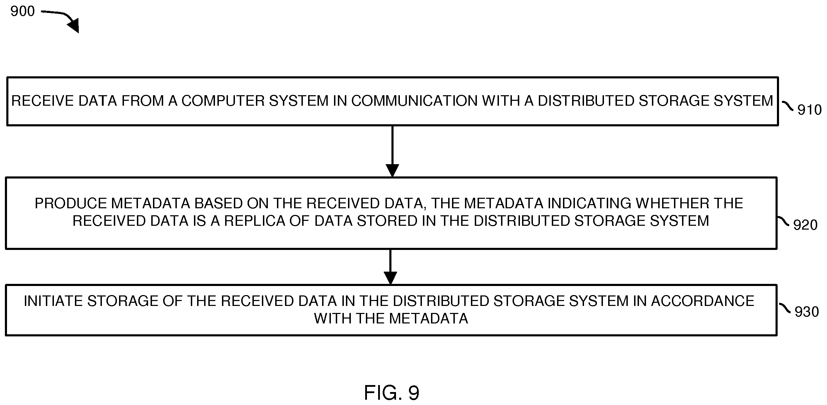

Functionality supported by the different resources will now be discussed via flowcharts in FIG. 9. Note that the processing in the flowcharts below can be executed in any suitable order.

FIG. 9 is a flowchart 900 illustrating an example method according to embodiments. Note that there will be some overlap with respect to concepts as discussed above.

In processing operation 910, a node in distributed storage system 115 receives data.

In processing operation 920, the node produces metadata based on the received data. In one embodiment, the metadata indicates whether the received data is a replica of data stored in the distributed storage system. As discussed herein, the received data may be replica data generated when first storing a backup copy of corresponding data in the distributed storage system 115. In accordance with another embodiment, as mentioned, the received data may be replica data generated during a data rebuild process that occurs in response to a node failure.

In processing operation 930, the node initiates storage of the received data in the distributed storage system 115 in accordance with the metadata.

Any of the resources as discussed herein can include one or more computerized devices, servers, base stations, wireless communication equipment, communication management systems, workstations, handheld or laptop computers, or the like to carry out and/or support any or all of the method operations disclosed herein. In other words, one or more computerized devices or processors can be programmed and/or configured to operate as explained herein to carry out different embodiments.

Yet other embodiments herein include software programs, firmware, logic, etc. to perform operations as disclosed herein. One such embodiment comprises a computer program product including a non-transitory computer-readable storage medium (i.e., any computer readable hardware storage medium) on which software instructions are encoded for subsequent execution. The instructions, when executed in a computerized device having one or more processors, program and/or cause the processor to perform the operations disclosed herein. Such arrangements can be provided as software, firmware, code, instructions, data (e.g., data structures), etc., arranged or encoded on a non-transitory computer readable storage medium such as an optical medium (e.g., CD-ROM), floppy disk, hard disk, memory, etc., or other a medium such as firmware in one or more ROM, RAM, PROM, etc., or as logic in an Application Specific Integrated Circuit (ASIC), etc. The software or firmware or other such configurations can be installed onto a computerized device to cause the computerized device to perform the techniques explained herein.

Accordingly, embodiments herein are directed to an apparatus, a method, a system, a computer program product, etc., that supports operations as discussed herein.

One embodiment includes a computer readable storage medium and/or system having instructions, logic, etc., stored thereon to manage configuration of a memory system including one or more non-volatile memory devices. The instructions, and/or logic, when executed by at least one processor device of a respective computer, cause the at least one processor device to: receive data at a particular node in the distributed storage system, the particular node in communication with data storage control logic having access to a repository including a cache storage resource and a non-cache storage resource; produce metadata based on the received data; and provide notification of the received data and the metadata to the data storage control logic, the metadata controlling storage of the received data in the repository at the particular node.

Note that any of the processing as discussed herein can be performed in any suitable order.

It is to be understood that the apparatus, system, method, apparatus, instructions on computer readable storage media, etc., as discussed herein also can be embodied strictly as a software program, firmware, as a hybrid of software, hardware and/or firmware, or as hardware alone such as within a processor device, within an operating system or a within a software application, etc.

Additionally, note that although each of the different features, techniques, configurations, etc., herein may be discussed in different places of this disclosure, it is intended, where suitable, that each of the concepts can optionally be executed independently of each other or in combination with each other. Any permutation of the disclosed features is possible. Accordingly, the one or more embodiments as described herein can be embodied and viewed in many different ways.

Note further that techniques herein are well suited for recovering from a detected failure in one or more non-volatile memory devices. However, it should be noted that embodiments herein are not limited to use in such applications and that the techniques discussed herein are well suited for other applications as well.

While specific embodiments have been particularly shown and described, it will be understood by those skilled in the art that various changes in form and details may be made therein without departing from the scope of the present application as defined by the appended claims. Such variations are intended to be covered by the scope of this present application. As such, the foregoing description of embodiments of the present application is not intended to be limiting. Rather, any limitations to the embodiments herein are presented in the following claims.

## Claims

1. A method for storing data in a distributed storage system (115) including multiple nodes (121, 122, 123, ...) that collectively manage data storage, the method comprising:
receiving first data at a first node (121) in the distributed storage system, the first data to be stored in a first repository (191) coupled with the first node through a data storage control logic (131), the first repository including a non-volatile cache storage resource (181-1) and a non-volatile non-cache storage resource (181-2);
producing first metadata (M1) based on the first data; and
providing notification of the first data and the first metadata to the data storage control logic , the first metadata controlling storage of the first data in the first repository at the first node; **characterized by**
receiving second data at the first node, the second data being a replica of data stored at a second repository (192) coupled with a second node (122) from among the multiple nodes included in the distributed storage system;
producing second metadata (M2), the second metadata indicating to the data storage control logic of the first node to bypass storage of the received second data in the non-volatile cache storage resource and store the received second data in the non-volatile non-cache storage resource; and
forwarding the second data and the second metadata to the data storage control logic of the first node.

2. The method as in claim 1, wherein an access time of the non-volatile cache resource is substantially shorter than an access time of the non-volatile non-cache resource; and
wherein producing the first metadata includes: generating the first metadata to indicate to the data storage control logic to bypass storage of the first data in the non-volatile cache storage resource and store the first data in the non-volatile non-cache storage resource of the repository.

3. The method as in claim 1 or 2, wherein the non-volatile cache storage resource is non-volatile memory; and
wherein the non-volatile non-cache storage resource is a disk drive storage resource.

4. The method as in claim 1, wherein the first data represents a replica of data stored at a failed node in the distributed storage system, a failure at the failed node preventing access to data managed by the failed node, the method further comprising:
in response to detecting that the first data is a copy of data stored in the failed node, generating the metadata to indicate to the data storage control logic to bypass storage of the received data in the non-volatile cache storage resource and store the received data in the non-volatile non-cache storage resource of the first repository.

5. The method as in claim 4 further comprising:
producing the replica of data stored at the failed node based on data stored in a non-failing node of the distributed storage system, the failed node being a third storage node in the distributed storage system, the non-failing node being a fourth storage node in the distributed storage system.

6. The method as in claim 1 further comprising:
generating replica data, the replica data being a replica of the first data; and
forwarding the replica data to the second node or a third node in the distributed storage system.

7. A distributed storage system comprising:
multiple interconnected nodes (121, 122, 123, ...) that collectively manage data storage, the multiple interconnected nodes including a first node (121) operable to:
receive first data from a resource in communication with the distributed storage system, the first data to be stored in a first repository (192) coupled with the first node through a data storage control logic (131), the first repository including a non-volatile cache storage resource (181-1) and a non-volatile non-cache storage resource (181-2);
produce first metadata (M1) based on the first data; and
provide notification of the first data and the first metadata to the data storage control logic (132), the first metadata controlling storage of the first data in the first repository, **characterized in that** the first node is operable to
receive second data, the second data being a replica of data stored at a second repository (192) coupled with a second node (122) from among the multiple nodes included in the distributed storage system;
produce second metadata (M2), the second metadata indicating to the data storage control logic of the first node to bypass storage of the second data in the non-volatile cache storage resource and store the received second data in the non-volatile non-cache storage resource; and
forward the second data and the second metadata to the data storage control logic of the first node.

8. The distributed storage system as in claim 7, wherein the non-volatile cache storage resource is non-volatile memory; and
wherein the non-volatile non-cache storage resource is a disk drive storage resource.

9. A computer system having access to the distributed storage system as in claim 7, the computer system including a display screen on which to render an image based at least in part on the data received by the first node of the distributed storage system.

10. Machine-readable storage including machine-readable instructions, adapted to perform all the steps of the method as claimed in claims 1 to 6 when said machine-readable instructions are run on a computer.

## Patentansprüche

1. Verfahren zum Speichern von Daten in einem verteilten Speichersystem (115), aufweisend mehrere Knoten (121, 122, 123, ...), die gemeinsam Datenspeicherung verwalten, wobei das Verfahren umfasst:
Empfangen von ersten Daten an einem ersten Knoten (121) in dem verteilten Speichersystem, wobei die ersten Daten in einem ersten Repository (191) gespeichert werden sollen, das durch eine Datenspeicher-Steuerlogik (131) mit dem ersten Knoten gekoppelt ist, wobei das erste Repository eine nichtflüchtige Cache-Speicherressource (181-1) und eine nichtflüchtige Nicht-Cache-Speicherressource (181-2) aufweist;
Erzeugen von ersten Metadaten (M1) basierend auf den ersten Daten; und
Bereitstellen einer Benachrichtigung zu den ersten Daten und den ersten Metadaten für die Datenspeicher-Steuerlogik, wobei die ersten Metadaten das Speichern der ersten Daten in dem ersten Repository an dem ersten Knoten steuern, **gekennzeichnet durch**
Empfangen von zweiten Daten an dem ersten Knoten, wobei die zweiten Daten eine Reproduktion von Daten sind, die in einem zweiten Repository (192) gespeichert sind, das mit einem zweiten Knoten (122) unter den mehreren in dem verteilten Speichersystem umfassten Knoten gekoppelt ist;
Erzeugen von zweiten Metadaten (M2), wobei die zweiten Metadaten der Datenspeicher-Steuerlogik des ersten Knotens angeben, das Speichern der empfangenen zweiten Daten in der nichtflüchtigen Cache-Speicherressource zu übergehen und die empfangenen zweiten Daten in der nichtflüchtigen Nicht-Cache-Speicherressource zu speichern; und
Weiterleiten der zweiten Daten und der zweiten Metadaten zu der Datenspeicher-Steuerlogik des ersten Knotens.

2. Verfahren nach Anspruch 1, wobei eine Zugriffszeit der nichtflüchtigen Cache-Ressource wesentlich kürzer ist als eine Zugriffszeit der nichtflüchtigen Nicht-Cache-Ressource; und
wobei das Erzeugen der ersten Metadaten aufweist: Erzeugen der ersten Metadaten, um der Datenspeicher-Steuerlogik anzugeben, das Speichern der ersten Daten in der nichtflüchtigen Cache-Speicherressource zu übergehen und die ersten Daten in der nichtflüchtigen Nicht-Cache-Speicherressource des Repository zu speichern.

3. Verfahren nach Anspruch 1 oder 2, wobei die nichtflüchtige Cache-Speicherressource nichtflüchtiger Speicher ist; und
wobei die nichtflüchtige Nicht-Cache-Speicherressource eine Plattenlaufwerk-Speicherressource ist.

4. Verfahren nach Anspruch 1, wobei die ersten Daten eine Reproduktion von an einem fehlerbehafteten Knoten in dem verteilten Speichersystem gespeicherten Daten wiedergeben, wobei ein Fehler an dem fehlerbehafteten Knoten den Zugriff auf durch den fehlerbehafteten Knoten verwaltete Daten verhindert und das Verfahren ferner umfasst:
In Reaktion auf das Detektieren, dass die ersten Daten eine Kopie von in dem fehlerbehafteten Knoten gespeicherten Daten sind: Erzeugen der Metadaten, um der Datenspeicher-Steuerlogik anzugeben, das Speichern der empfangenen Daten in der nichtflüchtigen Cache-Speicherressource zu übergehen und die empfangenen Daten in der nichtflüchtigen Nicht-Cache-Speicherressource des ersten Repository zu speichern.

5. Verfahren nach Anspruch 4, ferner umfassend:
Erzeugen der Reproduktion von an dem fehlerbehafteten Knoten gespeicherten Daten basierend auf in einem nicht fehlerbehafteten Knoten des verteilten Speichersystems gespeicherten Daten, wobei der fehlerbehaftete Knoten ein dritter Speicherknoten in dem verteilten Speichersystem ist, wobei der nicht fehlerbehaftete Knoten ein vierter Speicherknoten in dem verteilten Speichersystem ist.

6. Verfahren nach Anspruch 1, ferner umfassend:
Erzeugen von Reproduktionsdaten, wobei die Reproduktionsdaten eine Reproduktion der ersten Daten sind; und
Weiterleiten der Reproduktionsdaten zu dem zweiten Knoten oder einem dritten Knoten in dem verteilten Speichersystem.

7. Verteiltes Speichersystem, umfassend:
mehrere untereinander verbundene Knoten (121, 122, 123, ...), die gemeinsam Datenspeicherung verwalten, wobei die mehreren untereinander verbundenen Knoten einen ersten Knoten (121) aufweisen, betreibbar zum
Empfangen von ersten Daten von einer Ressource in Kommunikation mit dem verteilten Speichersystem, wobei die ersten Daten in einem ersten Repository (192) gespeichert werden sollen, das durch eine Datenspeicher-Steuerlogik (131) mit dem ersten Knoten gekoppelt ist, wobei das erste Repository eine nichtflüchtige Cache-Speicherressource (181-1) und eine nichtflüchtige Nicht-Cache-Speicherressource (181-2) aufweist;
Erzeugen von ersten Metadaten (M1) basierend auf den ersten Daten; und
Bereitstellen einer Benachrichtigung zu den ersten Daten und den ersten Metadaten für die Datenspeicher-Steuerlogik (132), wobei die ersten Metadaten das Speichern der ersten Daten in dem ersten Repository steuern, **dadurch gekennzeichnet, dass** der erste Knoten betreibbar ist zum
Empfangen von zweiten Daten, wobei die zweiten Daten eine Reproduktion von Daten sind, die in einem zweiten Repository (192) gespeichert sind, das mit einem zweiten Knoten (122) unter den mehreren in dem verteilten Speichersystem umfassten Knoten gekoppelt ist;
Erzeugen von zweiten Metadaten (M2), wobei die zweiten Metadaten der Datenspeicher-Steuerlogik des ersten Knotens angeben, das Speichern der zweiten Daten in der nichtflüchtigen Cache-Speicherressource zu übergehen und die empfangenen zweiten Daten in der nichtflüchtigen Nicht-Cache-Speicherressource zu speichern; und
Weiterleiten der zweiten Daten und der zweiten Metadaten zu der Datenspeicher-Steuerlogik des ersten Knotens.

8. Verteiltes Speichersystem nach Anspruch 7, wobei die nichtflüchtige Cache-Speicherressource nichtflüchtiger Speicher ist; und
wobei die nichtflüchtige Nicht-Cache-Speicherressource eine Plattenlaufwerk-Speicherressource ist.

9. Rechnersystem, aufweisend Zugang zu dem verteilten Speichersystem nach Anspruch 7, wobei das Rechnersystem einen Anzeigebildschirm aufweist, auf dem ein Bild basierend zumindest teilweise auf den durch den ersten Knoten des verteilten Speichersystems empfangenen Daten gerendert werden soll.

10. Maschinenlesbarer Speicher, aufweisend maschinenlesbare Anweisungen, eingerichtet zum Durchführen aller Schritte des Verfahrens nach den Ansprüchen 1 bis 6, wenn die maschinenlesbaren Anweisungen auf einem Rechner ausgeführt werden.

## Revendications

1. Procédé permettant de stocker des données dans un système de stockage distribué (115) comprenant plusieurs nœuds (121, 122, 123, ...) gérant collectivement un stockage de données, le procédé comprenant :
la réception de premières données au niveau d'un premier nœud (121) dans le système de stockage distribué, les premières données étant destinées à être stockées dans un premier référentiel (191) couplé au premier nœud par une logique de commande de stockage de données (131), le premier référentiel comprenant une ressource de stockage de cache non volatile (181-1) et une ressource de stockage non de cache non volatile (181-2) ;
la production de premières métadonnées (M1) basées sur les premières données ; et
la fourniture d'une notification des premières données et des premières métadonnées à la logique de commande de stockage de données, les premières métadonnées commandant le stockage des premières données dans le premier référentiel au premier noeud ;
**caractérisé par**
la réception de deuxièmes données au premier nœud, les deuxièmes données étant une réplique de données stockées dans un deuxième référentiel (192) couplé à un deuxième nœud (122) parmi les plusieurs nœuds compris dans le système de stockage distribué ;
la production de deuxièmes métadonnées (M2), les deuxièmes métadonnées indiquant à la logique de commande de stockage de données du premier nœud de contourner le stockage des deuxièmes données reçues dans la ressource de stockage de cache non volatile et de stocker les deuxièmes données reçues dans la ressource de stockage non de cache non volatile ; et
la retransmission des deuxièmes données et des deuxièmes métadonnées à la logique de commande de stockage de données du premier nœud.

2. Procédé selon la revendication 1, dans lequel un temps d'accès de la ressource de cache non volatile est substantiellement plus court qu'un temps d'accès de la ressource non de cache non volatile ; et
dans lequel la production des premières métadonnées comprend : la génération des premières métadonnées pour indiquer à la logique de commande de stockage de données de contourner le stockage des premières données dans la ressource de stockage de cache non volatile et de stocker les premières données dans la ressource de stockage non de cache non volatile du référentiel.

3. Procédé selon la revendication 1 ou 2, dans lequel la ressource de stockage de cache non volatile est une mémoire non volatile ; et
dans lequel la ressource de stockage non de cache non volatile est une ressource de stockage de lecteur de disque.

4. Procédé selon la revendication 1, dans lequel les premières données représentent une réplique de données stockées sur un nœud défaillant dans le système de stockage distribué, une défaillance au niveau du nœud défaillant empêchant l'accès à des données gérées par le nœud défaillant, le procédé comprenant en outre :
en réponse à la détection que les premières données sont une copie de données stockées dans le nœud défaillant, la génération des métadonnées pour indiquer à la logique de commande de stockage de données de contourner le stockage des données reçues dans la ressource de stockage de cache non volatile et de stocker les données reçues dans la ressource de stockage non de cache non volatile du premier référentiel.

5. Procédé selon la revendication 4, comprenant en outre :
la production de la réplique de données stockées au niveau du nœud défaillant sur la base de données stockées dans un nœud non défaillant du système de stockage distribué, le nœud défaillant étant un troisième nœud de stockage dans le système de stockage distribué, le nœud non défaillant étant un quatrième nœud de stockage dans le système de stockage distribué.

6. Procédé selon la revendication 1, comprenant en outre :
la génération de données de réplique, les données de réplique étant une réplique des premières données ; et
la retransmission des données de réplique au deuxième nœud ou à un troisième nœud dans le système de stockage distribué.

7. Système de stockage distribué, comprenant :
plusieurs nœuds interconnectés (121, 122, 123, ...) gérant collectivement un stockage de données, les plusieurs nœuds interconnectés comprenant un premier nœud (121) utilisable pour :
recevoir des premières données d'une ressource en communication avec le système de stockage distribué, les premières données étant destinées à être stockées dans un premier référentiel (192) couplé au premier nœud par une logique de commande de stockage de données (131), le premier référentiel comprenant une ressource de stockage de cache non volatile (181-1) et une ressource de stockage non de cache non volatile (181-2) ;
produire des premières métadonnées (M1) basées sur les premières données ; et
fournir une notification des premières données et des premières métadonnées à la logique de commande de stockage de données (132), les premières métadonnées commandant le stockage des premières données dans le premier référentiel,
**caractérisé en ce que** le premier nœud est utilisable pour :
recevoir des deuxièmes données, les deuxièmes données étant une réplique de données stockées dans un deuxième référentiel (192) couplé à un deuxième nœud (122) parmi les plusieurs nœuds compris dans le système de stockage distribué ;
produire des deuxième métadonnées (M2), les deuxièmes métadonnées indiquant à la logique de commande de stockage de données du premier nœud de contourner un stockage des deuxièmes données dans la ressource de stockage de cache non volatile et de stocker les deuxièmes données reçues dans la ressource de stockage non de cache non volatile ; et
retransmettre les deuxièmes données et les deuxièmes métadonnées à la logique de commande de stockage de données du premier nœud.

8. Système de stockage distribué selon la revendication 7, dans lequel la ressource de stockage de cache non volatile est une mémoire non volatile ; et
dans lequel la ressource de stockage non de cache non volatile est une ressource de stockage de lecteur de disque.

9. Système informatique ayant accès au système de stockage distribué selon la revendication 7, le système informatique comprenant un écran d'affichage sur lequel une image basée au moins en partie sur les données reçues par le premier nœud du système de stockage distribué est à représenter.

10. Stockage lisible par machine, comprenant des instructions lisibles par machine, adapté pour effectuer l'ensemble des étapes du procédé selon l'une quelconque des revendications 1 à 6 lorsque lesdites instructions lisibles par machine sont exécutées sur un ordinateur.
